# EUROPÄISCHE PATENTSCHRIFT

(11) **EP 1 047 984 B1**
(45) Veröffentlichungstag und Bekanntmachung des Hinweises auf die Patenterteilung: **17.10.2001**
(21) Anmeldenummer: 98963319.3
(22) Anmeldetag: 05.11.1998
(51) Int. Cl.: G05D 23/24, B60N 2/44

(54) **VERFAHREN ZUR HEIZSTROMREGELUNG UND SITZHEIZUNGSREGELSCHALTUNG**
METHOD FOR CONTROLLING HEATING CURRENT AND SEAT HEATING CONTROL CIRCUIT
PROCEDE DE REGULATION DU COURANT DE CHAUFFAGE ET CIRCUIT DE REGULATION D'UN SYSTEME DE CHAUFFAGE DE SIEGE

(30) Priorität: 25.11.1997 DE 19752135
(43) Veröffentlichungstag der Anmeldung: 02.11.2000
(73) Patentinhaber: ROBERT BOSCH GMBH, 70442 Stuttgart (DE)
(72) Erfinder: TOPP, Rainer, D-72768 Reutlingen (DE)
(86) Internationale Anmeldenummer: DE9803217
(87) Internationale Veröffentlichungsnummer: WO9927430

(56) Entgegenhaltungen:
- WO-A-96/25301
- DE-A- 4 141 224
- DE-A- 4 318 432
- US-A- 5 075 537

## Beschreibung

### Stand der Technik

Die Erfindung geht aus von einem Verfahren beziehungsweise einer Schaltung zur temperaturabhängigen Regelung des Heizstroms von Sitzheizungen nach der Gattung des Hauptanspruchs. Es ist schon eine solche Schaltung beziehungsweise ein solches Verfahren bekannt (deutsche Patentanmeldung mit dem Aktenzeichen P 197 08 867.8), bei der bzw. bei dem das Sensorelement getrennt von einer Logikschaltung angeordnet ist sowie Temperaturerfassung und Heizen des Sitzes gleichzeitig erfolgen. DE-A- 4 318 432 beschreibt ein Verfahren nach der Gattung de Oberbegriffs des Anspruchs 1.

### Vorteile der Erfindung

Das erfindungsgemäße Verfahren bzw. die erfindungsgemäße Schaltung mit den kennzeichnenden Merkmalen der unabhängigen Ansprüche haben demgegenüber den Vorteil, durch eine höhere Integration der Einzelkomponenten des Sitzheizungssystems zu einer kostengünstigen Systemauslegung zu gelangen, wobei speziell eine Kostenersparnis über vereinfachte Montageaufwendungen, und diese wiederum über eine reduzierte Anzahl von zu montierenden Systemkomponenten, erreicht wird. Das erfindungsgemäße Verfahren führt hierbei zu einer Verbesserung der Erfassung der Sitztemperatur insbesondere bei einem in unmittelbarer Nähe des Leistungsschalters, der dem Heizstrom schaltet, angeordneten Sensorelement, das die Temperatur des Sitzes erfassen soll. Aufgrund des hohen Integrationsgrades erfolgt eine so weitgehende Miniaturisierung der Schaltung, daß sie ohne Nachteil für den Sitzkomfort des KFZ-Passagiers in jedem Bereich der Sitzfläche eingebaut werden kann und so eine optimale Temperaturerfassung der Sitzfläche ermöglicht. Weiterhin ist eine erhöhte Systemzuverlässigkeit aufgrund einer reduzierten Anzahl von Verbindungen zwischen den Systemkomponenten zu verzeichnen. Besonders vorteilhaft ist dabei eine Anpassung der Heizphasendauer an die unmittelbar zuvor gemessene Temperatur, was eine zeit- und energiekostenoptimierte Heizweise ermöglicht.

Durch die in den abhängigen Ansprüchen aufgeführten Maßnahmen sind vorteilhafte Weiterbildungen und Verbesserungen der in den unabhängigen Ansprüchen angegebenen Schaltung bzw. des Verfahrens möglich. Die Abspeicherung einer Zuordnung von Heizphasendauern zu bestimmten Temperaturen in einer H-Tabelle in einem (EE)PROM-Speicher oder ROM-Speicher stellt eine einfache Realisierung des Verfahrens dar.

Eine Variation des Temperaturvergleichswerts in Abhängigkeit von der Dauer der vorigen Heizphase verbessert die Temperaturerfassung weiter, indem noch genauer die überhöhte Temperatur des Sensorelements im Vergleich zum gesamten Sitz in Folge der unmittelbaren Nachbarschaft des Leistungsschalters berücksichtigt wird.

Eine Anordnung des Leistungsschalters auf einem zweiten Chip getrennt von einem ersten Chip, der das Sensorelement und die Logikschaltung enthält, führt bei weiterhin garantierter Miniaturisierung eine weitere Verminderung der Verfälschung der Temperaturerfassung in Folge der räumlichen Nähe des Sensorelements zum Leistungsschalter.

Nochmals verbessert sich die Temperaturerfassung im oben genannten Sinne durch Verbindung des (ersten) Chips mit einem in den Sitz integrierten Kupfergeflecht.

### Zeichnung

Ausführungsbeispiele der Erfindung sind in der Zeichnung dargestellt und in der nachfolgenden Beschreibung näher erläutert. Es zeigen:
Figur 1 eine Sitzheizungsschaltung,
Figur 2 eine Anordnung eines erfindungsgemäßen vollintegrierten Sitzheizungsreglers in einem Autositz,
Figur 3 ein erstes Verfahren zur temperaturabhängigen Regelung des Heizstroms,
Figur 4 eine erste Tabelle,
Figur 5 Diagramme der Zeitabhängigkeit von Heizstrom und Sitztemperatur,
Figur 6 ein zweites Verfahren und
Figur 7 eine zweite Tabelle.

### Beschreibung der Ausführungsbeispiele

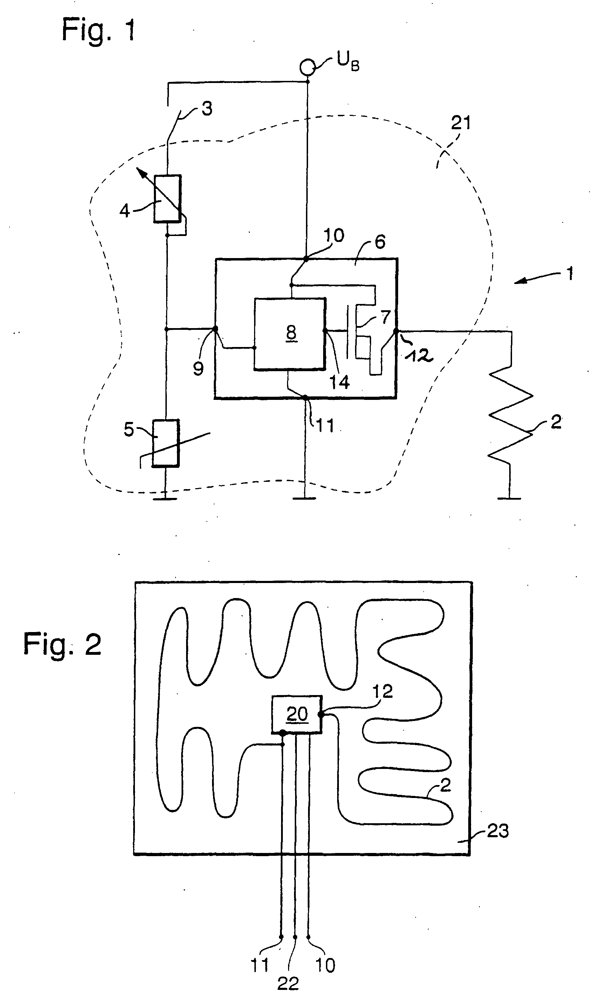

Figur 1 zeigt eine Sitzheizungsschaltung 1 mit einem Heizelement 2, das über ein Regelmodul 6 mit einer Versorgungsspannung U_{B} verbindbar ist. Das Regelmodul 6 weist einen Temperatureingang 9, einen Spannungsanschluß 10, einen Masseanschluß 11 und einen Lastanschluß 12 auf. Das Heizelement ist dabei zum einen mit Masse und zum anderen mit dem Lastanschluß 12 verbunden. Der Spannungsanschluß 10 des Regelmoduls 6 ist mit der Versorgungsspannung U_{B} verbunden. Der Masseanschluß 11 ist mit Masse verbunden. Der Temperatureingang 9 ist mit dem Mittenabgriff eines Spannungsteilers verbunden, der zwischen Masse und der Versorgungsspannung U_{B} angeschlossen ist, wobei dieser einen Temperaturwahlwiderstand 4 und einen NTC-Widerstand 5 aufweist. Die Verbindung des Spannungsteilers zur Versorgungsspannung U_{B} verläuft über einen Schalter 3. Das Regelmodul 6 weist eine Logikschaltung 8 auf, die über den Masseanschluß 11 und den Spannungsanschluß 10 mit Energie versorgt wird und die ebenfalls mit dem Temperatureingang 9 verbunden ist. Der Steueranschluß 14 der Logikschaltung ist mit dem Steuereingang des Leistungsschalters 7 verbunden, dessen Schaltstrecke wiederum die Verbindung zwischen dem Spannungsanschluß 10 und dem Lastanschluß 12 schaltet. Das gestrichelt markierte Schaltungsteil 21 umfaßt den Temperaturwahlwiderstand 4, den NTC-Widerstand 5 und das Regelmodul 6 und wird bei der Erläuterung der Figur 2 näher beschrieben.

Das Regelmodul erfaßt die Teilerabgriffspannung des aus den zwei Widerständen 4 und 5 gebildeten Spannungsteilers, wobei die Teilerspannung aufgrund des im Sitz angeordneten NTC-Widerstands 5 ein Maß für die Sitztemperatur darstellt. Das Regelmodul 6 schaltet daraufhin immer dann das im Sitz verlegte Heizelement 2 ein, wenn die Teilerspannung eine im Regelmodul 6 fest vorgegebene Spannungsreferenz überschreitet, d.h. wenn die Sitztemperatur einen bestimmten Wert unterschreitet. Über diese Regelung soll die Sitztemperatur konstant gehalten werden. Nach dem Stand der Technik sind dabei konstruktiv das Heizelement und der NTC-Widerstand sehr nahe an der Sitzoberfläche jeweils als eine separate Baugruppe angeordnet, während der Temperaturwahlwiderstand und das Regelmodul getrennt davon in einem weiteren Elektronikmodul im Armaturenbrett, an einer weiteren Halterung unterhalb des Sitzes, in einem Kabelbaum oder am Rand der Heizfläche integriert sind.

Figur 2 zeigt einen in einen Autositz 23 eingebauten vollintegrierten Sitzheizungsregler 20. Der Sitzheizungsregler 20 weist einen Masseanschluß 11, eine Ein-/Aus-Signalleitung 22, einen Spannungsanschluß 10 und einen Lastanschluß 12 auf. Masseanschluß 11 sowie Lastanschluß 12 sind mit dem mäanderförmig angeordneten Heizelement 2 elektrisch verbunden.

In dem Heizungsregler 20 ist der Schaltungsteil 21 integriert auf einem Chip angeordnet, nur noch der Ein- und Ausschalter und das Heizelement werden als weitere Komponente für ein komplettes Sitz-Heizungssystem benötigt. Der vollintegrierte Sitzheizungsregler 20 kann in einem üblichen Leistungsgehäuse als ein sehr kompaktes und kleines Element aufgebaut werden und damit an dem Ort im System eingebaut werden, an dem bisher üblicherweise zu einer optimalen Temperaturerfassung der NTC-Widerstand angeordnet war, und zwar frei wählbar in der Heizwicklungsebene des Systems. Die Logikschaltung 8 des Schaltungsteils 21 realisiert einen Regelalgorithmus, der eine Temperaturerfassung und Regelung der Sitztemperatur sicherstellt, die nicht entscheidend durch die Eigenerwärmung des integrierten Leistungsschalters 7, die bei einem Leistungsschalter immmer in einem gewissen Maß vorhanden ist, gestört wird.

Neben den in Figur 2 dargestellten Anschlüssen des integrierten Sitzheizungsreglers 20 sind weitere Anschlüsse für zusätzlich gewünschte Funktionen möglich, z.B. Solltemperaturumschaltung, Fehlerrückmeldung, Lampentreiber usw. Ferner sind zusätzlich Funktionen wie Leistungsunterbrechungserkennung, Überlastabschaltung, Überzeitabschaltung usw. integrierbar. Weitere Optimierungsmöglichkeiten des vollintegrierten Sitzheizungsreglers 20 bestehen z.B. darin, die Kühlfläche des Leistungsgehäuses des Sitzheizungsreglers zur besseren Wärmeanpassung mit der Sitzfläche in der Heizwicklungsebene thermisch mit einem flexiblen Kupfergeflecht zu verbinden und so die Temperaturerfassung des Elements noch unabhängiger von der Eigenerwärmung und noch abhängiger von der Sitzflächentemperatur zu machen. Hierzu dient ebenso eine möglichst niederohmige Auslegung des Leistungsschalters, der den Heizstrom aktiviert. Ein weiteres Ausführungsbeispiel des integrierten Sitzheizungsreglers 20 besteht darin, alle oben angeführten Funktionen in zwei Halbleiterchips zu integrieren und diese beiden Chips gemeinsam in einem Gehäuse zu einer funktionalen Einheit zu montieren. In diesem Fall ist es vorteilhaft, die Leistungsendstufe als reinen POWER-MOS-Transistor als ein Element, eventuell noch mit Strom und Temperatur-Sense-Ausgängen zur Unterstützung der Eigenschutzfunktionen des Reglers, aufzubauen und alle übrigen Funktionen wie Temperaturerfassung und Logikschaltung als ein zweites Element in Form eines integrierten Signalschaltkreises auszugestalten. Auf diese Weise wird eine kostengünstige und möglichst niederohmige Auslegung der Schaltendstufe bei gleichzeitiger verbesserter thermischer Endkopplung zwischen Leistungsendstufe und Temperaturerfassungsschaltung, die in unmittelbarer Nachbarschaft angeordnet sind, noch weiter unterstützt.

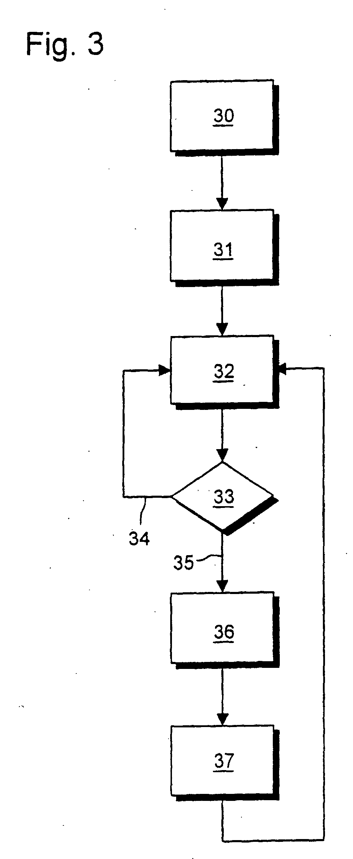

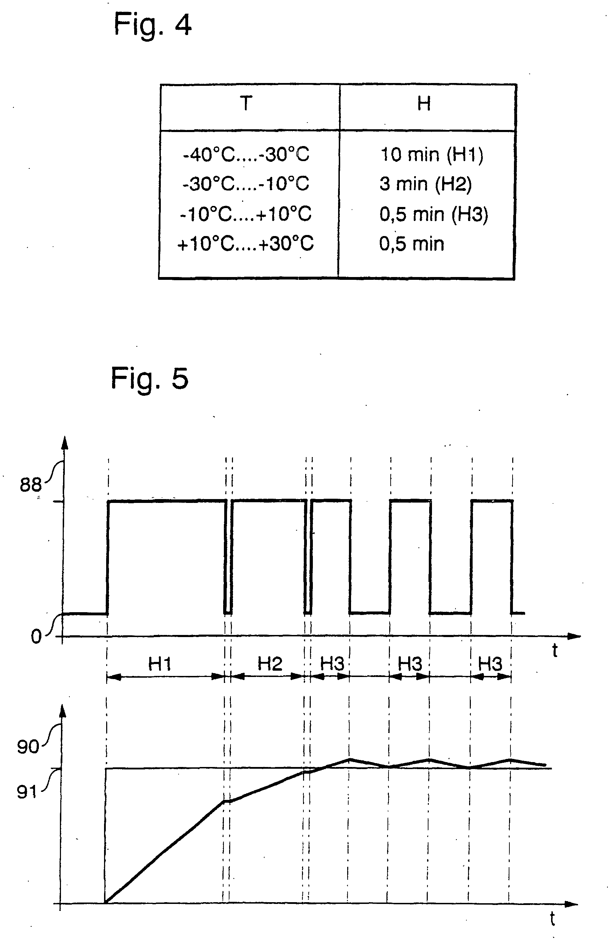

Figur 3 zeigt ein erstes Verfahren zur Sitzheizungsregelung, wie es in der Logikschaltung 8 des vollintegrierten Sitzheizungsreglers 20 realisierbar ist. Nach dem Einschalten 30 erfolgt eine Initialisierung der Variable H, die auf 0 gesetzt wird und die Heizphasendauer repräsentiert. In einem weiteren Schritt wird die Sensortemperatur T des NTC-Widerstandes durch die Logikschaltung erfaßt; die Heizung ist (noch) aus. Die Initialisierung ist mit Bezugszeichen 31 versehen, die Erfassung der Sensortemperatur mit Bezugszeichen 32. In einem weiteren Schritt erfolgt ein Vergleich 33 der Sensortemperatur T mit einem Zielwert von beispielsweise 30° C. Ist die Sensortemperatur größer als der Zielwert, wird über eine Wiederholschleife 34 die Temperaturerfassung 32 wiederholt, und zwar so lange, bis die Sensortemperatur T den Zielwert unterschreitet. Dann wird in die Heizschleife 35 übergegangen und in einem Schritt 36 die Heizphasendauer festgelegt, indem aus einer sogenannten H-Tabelle (siehe Figur 4) entsprechend dem erfaßten Sensortemperaturwert T eine Heizphasendauer H1, H2, H3 usw. abgelesen wird, wobei die Heizphasendauer um so länger ist, je kleiner der Wert der erfaßten Sensortemperatur ist. Es folgt eine Heizphase 37 entsprechend der abgelesenen und vorgemerkten Heizphasendauer; anschließend wird der Heizstrom durch das Heizelement wieder abgeschaltet. Nach der Heizphase 37 wird die Erfassung 32 der Sensortemperatur T wiederholt; in diesem Zeitpunkt ist die Heizung (wieder) aus. Dem Schritt 32 schließen sich in wiederholter Weise die zuvor beschriebenen nachfolgenden Schritte an, so daß die Temperatur nach einem Aufheizen mit sich ständig verkürzenden Heizphasendauern durch nur noch kurze Heizphasendauern, die von längeren heizstromlosen Perioden unterbrochen sind, aufrechterhalten wird.

Das Verfahren zeichnet sich dadurch aus, daß die Erfassung der Sitztemperatur über einen integrierten Temperatursensor nur während der unbestromten Phase der Heizwicklung, das heißt, im Auszustand des integrierten Leistungsschalters, durchgeführt wird, und in dieser Phase bei Unterschreiten einer gewissen Temperaturschwelle des Sitzes eine neue Heizphase der Heizwicklung gestartet wird, während die Heizphase des Systems zeitgesteuert ist, wobei die Heizphase zum Beispiel über eine einfache Tabellenzuordnung, (E)EPROM-Speicher, umso länger aktiviert wird, je tiefer die kurz vor Auslösung der Heizphase gemessene Sitztemperatur gelegen ist. Das Verfahren kompensiert die thermische Verkopplung zwischen Leistungsendstufe und Temperaturerfassungselement und die damit verbundene Eigenerwärmung des Temperatursensors. Die Tabellenzuordnung zwischen Heizphasendauer und vorhergehender Sitztemperatur ist dabei applikationsspezifisch festzulegen.

Figur 4 zeigt eine Heizphasentabelle, kurz H-Tabelle genannt. Sie ordnet Bereichen von Sensortemperaturen T Heizphasendauern H zu, zum Beispiel dem Bereich von -40° C bis 30° C den Heizphasendauerwert H1 von 10 Minuten. Dem Temperaturbereich von -30° C bis -10° C wird ein Wert von 3 Minuten, dem Temperaturbereich von -10° C bis +10° C ein Wert H3 von 0,5 Minuten und dem Temperaturbereich von 10° C bis +30° C ebenfalls ein Wert von 0,5 Minuten zugeordnet. Diese Tabelle ist beispielsweise in einem programmierbaren oder fest programmierten Speicher der Logikschaltung 8 abgespeichert und wird wie in Figur 3 beschrieben eingesetzt.

Figur 5 zeigt typische Zeitabhängigkeiten des Heizstromes 88 und der Sitztemperatur 90. Die aufeinanderfolgenden Heizphasendauern H1, H2 und H3 werden mit zunehmender Zeit kürzer, da sich die Sitztemperatur mit der Zeit erhöht. Die Heizperioden sind von kurzen Perioden unterbrochen, in denen wie in Figur 3 beschrieben die Temperatur am Sensorelement, also am NTC-Widerstand, erfaßt wird. Hat die Sitztemperatur 90 den Zielwert 91 erreicht, wird nur noch durch periodisch auftretende Heizphasendauern 3, die kurz sind, die Sitztemperatur auf dem Zielwert gehalten. Heizstromlose Phasen entsprechen dabei in Figur 3 Phasen, in denen die Wiederholschleife 34 durchlaufen wird.

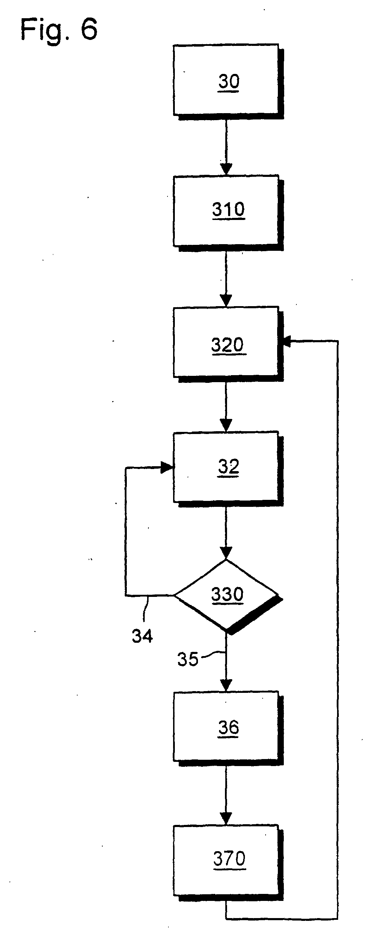

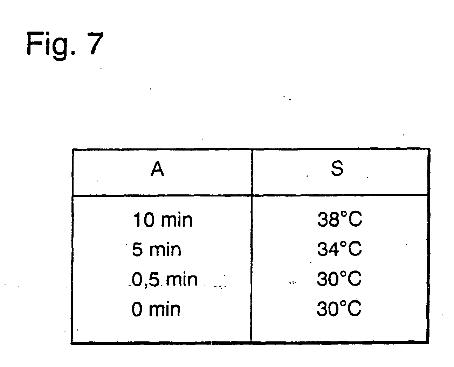

Figur 6 zeigt ein zweites Verfahren zur Sitzheizungsregelung, wobei gleiche Schritte wie in Figur 3 mit gleichem Bezugszeichen versehen sind. Nach dem Einschalten 30 erfolgt eine Initialisierung 310 der Variablen A; sie wird auf 0 gesetzt und repräsentiert die vorangegangene Heizphasendauer. In einem weiteren Schritt 320 erfolgt eine Festlegung des Sensortemperatur-Sollwerts, in dem aus einer in einem Speicher abgelegten S-Tabelle (vergleiche Figur 7) entsprechend der vorangegangen Heizphasendauer A ein Sensortemperatur-sollwert S abgelesen und vorgemerkt wird. Darauf erfolgt die Erfassung der Sensortemperatur T (Schritt 32), in einem weiteren Schritt der Vergleich 330 der Sensortemperatur T mit dem Sensor-Sollwert S. Ist die Sensortemperatur T größer als der Sensor-Temperatur-Sollwert S wird über die Wiederholschleife 34 die Erfassung der Sensortemperatur 32 wiederholt. Ist jedoch der Wert der Sensortemperatur T kleiner als der Sensortemperatur-Sollwert S, wird über die Heizschleife 35 die Heizphasendauer festgelegt (Schritt 36), wie bereits in der Erläuterung zu Figur 3 beschrieben. Anschließend wird die Heizphase aktiviert entsprechend der zuvor festgelegten Heizphasendauer. Ist die Heizphasendauer abgelaufen, wird der Strom abgeschaltet und der Variablen A wird der Wert der gerade verwendeten Heizphasendauer zugeordnet. Heizphase sowie anschließende Abschaltung des Stroms und neue Belegung der Variablen A sind als Schritt 370 markiert. Anschließend wird zum Schritt 320 zurückgekehrt und erneut der Sensortemperatursollwert festgelegt, entsprechend der neuen Belegung der Variablen A. Die nachfolgenden zuvor beschriebenen Schritte werden erneut durchlaufen, so lange, bis die Sitztemperatur einen Zielwert von ca. 30° C erreicht hat.

Das Verfahren nach Figur 6 ist optimiert im Vergleich zum Verfahren nach Figur 3, da der Solltemperaturwert über eine weitere Tabellenzuordnung (S-Tabelle) an die Dauer einer zuvor stattgefundenen Heizphase angepaßt wird und somit die thermische Trägheit des Bauelements zugunsten einer schnellen Erfassung der Sitztemperatur kompensiert wird. Eine unmittelbar zuvor stattgefundene lange Heizphase bedeutet nämlich, daß der wahre Wert der Sitztemperatur noch erheblich tiefer liegt als die mit dem Sensorelement erfaßte Temperatur, also dem Sensortemperaturwert T. Diese "Verfälschung" tritt auch noch dann auf, wenn wie in den Beispielen nach Figur 3 und 6 zum Zeitpunkt der Temperaturerfaßung der Heizstrom abgeschaltet ist. Durch die Variation des Sensortemperatursollwertes nun wird diese "Verfälschung" weitgehend kompensiert.

Figur 7 zeigt eine Sensortemperatursollwerttabelle, kurz S-Tabelle genannt. Diese S-Tabelle weist vorangegangenen Heizphasendauern A Sensor-Temperatur-Sollwerte S zu. Den Wert A von 10 Minuten wird ein Sollwert von 38° C zugeordnet, dem Wert von 5 Minuten ein Sollwert S von 34° C, dem Wert von 0,5 Minuten ein Sensortemperatursollwert von 30° C und der vorangegangenen Heizphasendauer von 0 Minuten (also unmittelbar nach dem Einschalten) ein Sollwert von 30° C, der dem Zielwert entspricht.

Diese S-Tabelle ist vorteilhafterweise in einem weiteren (E)EPROM-Speicher oder ROM-Speicher abgespeichert und der Logikschaltung 8 zugeordnet. Auf die abgespeicherten Werte wird gemäß dem zweiten Verfahren nach Figur 6 zugegriffen.

## Patentansprüche

1. Verfahren zur temperaturabhängigen Regelung des Heizstroms einer Sitzheizung mit einem Sensorelement zur Erfassung der Sitztemperatur, bei dem nach Einschalten (30) der Sitzheizung die Sitztemperatur registriert, in Abhängigkeit von der Differenz der Sitztemperatur zu einem Vergleichswert eine Heizphasendauer festgelegt und anschließend ein Heizstrom eine Heizphasendauer lang eingeschaltet wird, **dadurch gekennzeichnet, daß** in einem weiteren Schritt eine weitere Registrierung der Sitztemperatur erfolgt, daß in Abhängigkeit von der gemessenen Sitztemperatur ein neuer Wert für die Heizphasendauer gewählt wird, daß der Heizstrom erneut eingeschaltet wird für die Dauer des neuen Werts und daß in weiteren Schritten weitere Registrierungen der Sitztemperatur und Einschaltungen des Heizstroms entsprechend neu gewählter Heizphasendauern in zeitlichem Wechsel erfolgen.

2. Verfahren nach Anspruch 1, **dadurch gekennzeichnet, daß** die Zuordnung von Heizphasendauer zu zuvor registrierter Sitztemperatur aus einer H-Tabelle abgelesen wird.

3. Verfahren nach Anspruch 2, **dadurch gekennzeichnet, daß** nach dem Einschalten (30) der Heizung eine Initialisierung (31; 310) der Heizphasendauer erfolgt,
- in einem weiteren Schritt eine Registrierung (32) der Sitztemperatur (T) erfolgt,
- in einem weiteren Schritt (33; 330) die registrierte Sitztemperatur (T) mit dem Vergleichswert verglichen wird,
- daß die Messung der Sitztemperatur solange erfolgt, bis sie den Vergleichswert unterschreitet,
- daß in einem weiteren Schritt (36, 37; 36, 370) der Heizstrom eingeschaltet wird für eine aus der H-Tabelle entsprechend der gemessenen Sitztemperatur entnommenen Heizphasendauer und
- daß anschließend wiederholt die weiteren Schritte durchlaufen werden.

4. Verfahren nach einem der vorhergehenden Ansprüche, **dadurch gekennzeichnet, daß** der Vergleichswert variiert wird in Abhängigkeit von der Dauer der vorigen Heizphase.

5. Verfahren nach Anspruch 4, **dadurch gekennzeichnet, daß** ein als Vergleichswert verwendeter Sitztemperatur-Sollwert aus einer S-Tabelle entnommen wird, die verschiedenen vorangegangenen Heizphasendauern unterschiedliche Sitztemperatur-Sollwerte zuordnet.

6. Verfahren nach Anspruch 3 und einem der Ansprüche 4 oder 5, **dadurch gekennzeichnet, daß** nach der Initialisierung (310) und vor der Registrierung (32) eine Festlegung des Vergleichswerts in einem weiteren Schritt (320) erfolgt.

7. Schaltung zur temperaturabhängigen Regelung des Heizstroms einer Sitzheizung mit einem ein sitztemperaturabhängiges Signal liefernden Sensorelement (5), mit einer Logikschaltung (8) und mit einem Leistungsschalter (7), **dadurch gekennzeichnet, daß** die Logikschaltung, das Sensorelement und wahlweise der Leistungsschalter hybrid oder monolithisch auf einem Chip integriert sind und daß mittels der Logikschaltung der Leistungsschalter zur Steuerung des Heizstroms ansteuerbar ist, so daß nach Einschalten (30) der Sitzheizung das Sensorelement die Sitztemperatur registriert, in Abhängigkeit von der Differenz der Sitztemperatur zu einem Vergleichswert die Logikschaltung eine Heizphasendauer festlegt und anschließend den Leistungsschalter eine Heizphasendauer lang einschaltet, wobei anschließend das Sensorelement nochmals die Sitztemperatur registriert und die Logikschaltung in Abhängigkeit von der gemessenen Sitztemperatur einen neuen Wert für die Heizphasendauer wählt und den Heizstrom erneut einschaltet für die Dauer des neuen Werts und daß in weiteren Schritten weitere Registrierungen der Sitztemperatur und Einschaltungen des Heizstroms entsprechend neu gewählter Heizphasendauern in zeitlichem Wechsel, erfolgen.

8. Schaltung nach Anspruch 7, **dadurch gekennzeichnet, daß** der Leistungsschalter auf einem zweiten Chip angeordnet ist.

9. Sitzheizungskonstruktion mit einer Schaltung zur temperaturabhängigen Regelung des Heizstroms einer Sitzheizung mit einem ein sitztemperaturabhängiges Signal liefernden Sensorelement (5), mit einer Logikschaltung (8) und mit einem Leistungsschalter (7), **dadurch gekennzeichnet, daß** die Logikschaltung, das Sensorelement und wahlweise der Leistungsschalter hybrid oder monolithisch auf einem Chip integriert sind, daß der Chip thermisch mit einem in den Sitz integrierten Kupfergeflecht verbunden ist und daß mittels der Logikschaltung der Leistungsschalter zur Steuerung des Heizstroms ansteuerbar ist, so daß nach Einschalten (30) der Sitzheizung das Sensorelement die Sitztemperatur registriert, in Abhängigkeit von der Differenz der Sitztemperatur zu einem Vergleichswert die Logikschaltung eine Heizphasendauer festlegt und anschließend den Leistungsschalter eine Heizphasendauer lang einschaltet, wobei anschließend das Sensorelement nochmals die Sitztemperatur registriert und die Logikschaltung in Abhängigkeit von der gemessenen Sitztemperatur einen neuen Wert für die Heizphasendauer wählt und den Heizstrom erneut einschaltet für die Dauer des neuen Werts und daß in weiteren Schritten weitere Registrierungen der Sitztemperatur und Einschaltungen des Heizstroms entsprechend neu gewählter Heizphasendauern in zeitlichem Wechsel erfolgen.

## Claims

1. Method for temperature-dependent control of the heating current of a seat heater having a sensor element for sensing the temperature of the seat, in which the temperature of the seat is registered after the seat heater is switched on (30), a heating phase duration is fixed as a function of the difference between the temperature of the seat and a comparison value, and a heating current is subsequently switched on for a heating phase duration, **characterized in that** in a further step a further registration of the temperature of the seat is carried out, **in that** a new value for the heating phase duration is selected as a function of the measured temperature of the seat, **in that** the heating current is switched on again for the duration of the new value, and **in that**, in further steps, there is an alternation over time between instances of the temperature of the seat being registered again and the heating current being switched on in accordance with newly selected heating phase durations.

2. Method according to Claim 1, **characterized in that** the assignment of the heating phase duration to a previously registered temperature of the seat is read off from an H table.

3. Method according to Claim 2, **characterized in that**, after the heater is switched on (30), the heating phase duration is initialized (31; 310),
- in a further step the temperature (T) of the seat is registered (32),
- in a further step (33; 330) the registered temperature (T) of the seat is compared with the comparison value,
- **in that** the temperature of the seat is measured until it drops below the comparison value,
- **in that**, in a further step (36, 37; 36, 370), the heating current is switched on for a heating phase duration obtained from the H table in accordance with the measured temperature of the seat, and
- **in that** the further steps are subsequently run through repeatedly.

4. Method according to one of the preceding claims, **characterized in that** the comparison value is varied as a function of the duration of the previous heating phase.

5. Method according to Claim 4, **characterized in that** a setpoint value of the temperature of the seat which is used as a comparison value is obtained from an S table which assigns different setpoint values of the temperature of the seat to different preceding heating phase durations.

6. Method according to Claim 3 and one of Claims 4 or 5, **characterized in that** the comparison value is fixed in a further step (320) after the initialization (310) and before the registration (32).

7. Circuit for temperature-dependent control of the heating current of a seat heater having a sensor element (5) which supplies a signal which is dependent on the temperature of the seat, having a logic circuit (8) and having a power switch (7), **characterized in that** the logic circuit, the sensor element and optionally the power switch are integrated in a hybrid or monolithic fashion on a chip, and **in that** the power switch can be actuated in order to control the heating current by means of the logic circuit, with the result that after the seat heater has been switched on (30) the sensor element registers the temperature of the seat, the logic circuit fixes a heating phase duration as a function of the difference between temperature of the seat and a comparison value and subsequently switches on the power switch for a heating phase duration, the sensor element subsequently registering the temperature of the seat once more and the logic circuit selecting a new value for the heating phase duration as a function of the measured temperature of the seat and switching on the heating current again for the duration of the new value, and **in that**, in further steps, there is an alternation over time between instances of the temperature of the seat being registered and the heating current being switched on in accordance with newly selected heating phase durations.

8. Circuit according to Claim 7, **characterized in that** the power switch is arranged on a second chip.

9. Design of a seat heater having a circuit for a temperature-dependent control of the heating current of a seat heater having a sensor element (5) which supplies a signal which is dependent on the temperature of the seat, having a logic circuit (8) and having a power switch (7), **characterized in that** the logic circuit, the sensor element and optionally the power switch are integrated in a hybrid or monolithic fashion on a chip, **in that** the chip is thermally connected to a copper mesh which is integrated into the seat, and **in that** the power switch can be actuated by means of the logic circuit in order to control the heating current, with the result that after the seat heater has been switched on (30) the sensor element registers the temperature of the seat, the logic circuit fixes a heating phase duration as a function of the difference between the temperature of the seat and a comparison value and subsequently switches on the power switch for a heating phase duration, the sensor element subsequently registering the temperature of the seat once more and the logic circuit selecting a new value for the heating phase duration as a function of the measured temperature of the seat and switching on the heating current again for the duration of the new value, and **in that**, in further steps, there is an alternation over time between instances of the seating temperature being registered again and the heating current being switched on in accordance with newly selected heating phase durations.

## Revendications

1. Procédé de régulation du courant de chauffage d'un système de chauffage de siège en fonction de la température, à l'aide d'un élément de détection pour détecter la température du siège, procédé selon lequel, après le branchement (30) du chauffage de siège, on enregistre la température du siège et, en fonction de la différence entre la température du siège et une valeur de comparaison, on fixe une durée de la phase de chauffage, et ensuite un courant de chauffage est branché pendant une durée de phase de chauffage,
**caractérisé en ce que**
- dans une autre étape, on enregistre une autre température de siège,
- en fonction de la température de siège mesurée on sélectionne une nouvelle valeur pour la durée de la phase de chauffage,
- on branche de nouveau le courant de chauffage pour la durée de la nouvelle valeur, et
- dans une autre étape on fait d'autres enregistrements de la température du siège et on branche le courant de chauffage suivant les nouvelles phases de chauffage sélectionnées, en alternant dans le temps.

2. Procédé selon la revendication 1,
**caractérisé en ce qu'**
on extrait l'association de la durée de la phase de chauffage à une température de siège enregistrée préalablement, à partir d'un tableau H.

3. Procédé selon la revendication 2,
**caractérisé en ce qu'**
- après le branchement (30) du chauffage, on initialise (31, 310) la durée de la phase de chauffage,
- dans une autre étape on enregistre (32) la température (T) du siège,
- dans une autre étape (33 ; 330) on compare la température du siège (T) enregistrée, à une valeur de comparaison,
- on mesure la température du siège jusqu'à ce qu'elle passe en dessous de la valeur de comparaison,
- dans une autre étape (36, 37 ; 36, 370) on branche le courant de chauffage pour une durée de phase de chauffage extraite du tableau H en fonction de la température mesurée du siège, et
- ensuite on répète les autres étapes.

4. Procédé selon l'une quelconque des revendications précédentes,
**caractérisé en ce qu'**
on fait varier la valeur de comparaison en fonction de la durée de la phase de chauffage précédente.

5. Procédé selon la revendication 4,
**caractérisé en ce qu'**
on extrait une valeur de consigne de la température de siège, utilisée comme valeur de comparaison, d'un tableau S qui associe différentes phases de chauffage précédentes à des valeurs de consigne différentes de la température du siège.

6. Procédé selon la revendication 3 et l'une quelconque des revendications 4 ou 5,
**caractérisé en ce qu'**
après l'initialisation (310) et avant l'enregistrement (32), on fixe la valeur de comparaison dans une autre étape (320).

7. Circuit de régulation du courant de chauffage en fonction de la température, pour un système de chauffage de siège, comprenant un élément de capteur (5) fournissant un signal dépendant de la température du siège, un circuit logique (8) et un commutateur de puissance (7),
**caractérisé en ce que**
- le circuit logique, l'élément de capteur et, au choix, le commutateur de puissance, sont intégrés de manière hybride ou monolithique sur une puce, et
- à l'aide du circuit logique, on commande le commutateur de puissance pour commander le courant de chauffage pour qu'après le branchement (30) du système de chauffage de siège, l'élément de capteur enregistre la température du siège et, en fonction de la différence entre la température du siège et une valeur de comparaison, le circuit logique fixe une durée de la phase de chauffage puis ensuite branche le commutateur de puissance pour la durée de la phase de chauffage,
- ensuite, l'élément de capteur enregistre une nouvelle fois la température du siège et le circuit logique, en fonction de la température mesurée du siège, sélectionne une nouvelle valeur de la durée de la phase de chauffage et branche de nouveau le courant de chauffage pour la durée d'une nouvelle valeur, et
- dans les étapes suivantes on effectue d'autres enregistrements de la température du siège et on branche le courant de chauffage selon les nouvelles durées sélectionnées de la phase de chauffage, selon une alternance dans le temps.

8. Circuit selon la revendication 7,
**caractérisé en ce que**
le commutateur de puissance est prévu sur une seconde puce.

9. Construction de systèmes de chauffage de sièges comprenant :
- un circuit pour la régulation du courant de chauffage d'un système de chauffage de siège en fonction de la température,
- un élément de capteur (5) fournissant un signal dépendant de la température du siège,
- un circuit logique (8) et un commutateur de puissance (7),
**caractérisée en ce que**
- le circuit logique, l'élément de capteur et, sélectivement, le commutateur de puissance, sont hybrides ou sont intégrés de manière monolithique sur une puce,
- la puce est reliée thermiquement à un tissu de cuivre intégré dans le siège, et
- à l'aide du circuit logique on commande le commutateur de puissance pour commander le courant de chauffage pour qu'après le branchement (30) du système de chauffage de siège, l'élément de capteur enregistre la température du siège et, en fonction de la différence entre la température du siège et une valeur de comparaison, le circuit logique fixe une durée de la phase de chauffage, puis le commutateur de puissance se ferme pendant la durée de la phase de chauffage,
- ensuite l'élément de capteur enregistre une nouvelle fois la température du siège et le circuit logique, en fonction de la température mesurée du siège, sélectionne une nouvelle valeur pour la durée de la phase de chauffage et branche de nouveau le courant de chauffage pour la durée de la nouvelle valeur, et
- dans d'autres étapes on effectue d'autres enregistrements de la température du siège et d'autres branchements du courant de chauffage selon les nouvelles durées choisies de la phase de chauffage, suivant une alternance dans le temps.
